# EUROPEAN PATENT APPLICATION

(11) **EP 4 603 991 A1**
(43) Date of publication of application: **20.08.2025**
(21) Application number: 24275013.1
(22) Date of filing: 16.02.2024
(51) Int. Cl.: G06F 18/30, G06V 10/25, G06V 10/20, G06V 10/26, G06V 10/764, G06V 10/80, G06V 20/00, G06V 20/52, G06V 20/58, G06V 20/56, G06V 20/62, G06V 20/64, G06V 20/70, G08G 5/00, G08G 5/06, G06V 20/10

(54) **AIRPORT SCENE PERCEPTION**

(71) Applicant: Rockwell Collins, Inc., Cedar Rapids, IA 52498 (US)
(72) Inventor: Naresh Yarlapati, GANESH, Cork (IE); Hector, PALOP, Cork (IE); Giovanni, FRANZINI, Glanmire (IE); Niall Chistopher, RYAN, Galway (IE)
(74) Representative: Dehns

(57) **Abstract**

A method of perceiving an airport scene is disclosed. The method comprises receiving an image of at least part of an airport and processing (304) said image using a first machine learning algorithm to identify at least one segment (402) in said image and determine an initial estimate of a category of airport feature present in said segment. The method also comprises determining (310) one or more real-world coordinates or dimensions associated with the segment, applying (312) one or more predetermined logical tests to the initial estimate of the category of airport feature present in the segment and the real-world coordinates or dimensions of the segment to determine a reviewed estimate of the category of airport feature present in the segment, and outputting (320) said reviewed estimate.

## Description

### Technical Field

The present disclosure relates to systems and methods for perceiving airport scenes.

### Background

Modern aircraft include numerous pilot aids including instruments and sensors to assist with navigation and awareness. Many of these devices are designed to reduce pilot workload in various phases of flight (e.g. taxi, take-off, landing), to improve safety, efficiency and/or passenger comfort.

It has been proposed to use images captured by cameras on-board aircraft in combination with machine learning models to assist with landing procedures. For instance, US 11,798,575 B2 describes a method of supporting an aircraft approaching a runway that involves receiving a sequence of images captured by a camera onboard the aircraft, applying a received image to a machine learning model trained to detect the runway or a runway marking in the image, and performing a perspective-n-point estimation to determine a current pose estimate of the aircraft relative to the runway or the marking and outputting the current pose estimate for use during final approach.

The use of machine learning can enable useful information for perceiving airport features to be produced more accurately and/or more efficiently than other approaches. However, existing machine learning based approaches may not be optimal or robust in some situations. An improved approach may be desired.

### Summary

When viewed from a first aspect, the present disclosure provides a method of perceiving an airport scene, the method comprising:
receiving an image of at least part of an airport;
processing said image using a first machine-learning algorithm to identify at least one segment in said image and determine an initial estimate of a category of airport feature present in said segment;
determining one or more real-world coordinates or dimensions associated with the segment;
applying one or more predetermined logical tests to the initial estimate of the category of airport feature present in the segment and the real-world coordinates or dimensions of the segment to determine a reviewed estimate of the category of airport feature present in the segment; and
outputting said reviewed estimate.

When viewed from a second aspect, the present disclosure provides a system for perceiving an airport scene, the system comprising:
an image data interface for receiving an image of at least part of an airport; and
a processing apparatus arranged to;
   process said image using a first machine learning algorithm to identify at least one segment in said image and determine an initial estimate of a category of airport feature present in said segment;
   determine one or more real-world coordinates or dimensions associated with the segment;
   apply one or more predetermined logical tests using the initial estimate of the category of airport feature present in the segment and the real-world coordinates or dimensions of the segment to determine a reviewed estimate of the category of airport feature present in the segment; and
   output said reviewed estimate.

Thus, it will be appreciated by those skilled in the art that examples of the present disclosure can improve the accuracy and reliability with which an airport scene can be perceived. The reviewed estimate of what airport feature is present in a segment of the image (e.g. a region of the image defined by polygonised spatial coordinates) can, for instance, be provided to a human user (e.g. a pilot) or a computer control system (e.g. an aircraft flight control computer) to improve understanding of the airport scene and aid airport operations.

Because the reviewed estimate is determined by applying one or more predetermined logical tests (i.e. logical reasoning tests decided in advance) to an initial category estimate determined by machine learning, implausible or unlikely categorisations can be filtered out or correct categorisations can be verified, aiding accuracy and confidence in the scene perception.

The combination of machine learning and logical reasoning may be particularly suited to airports, because airport features such as runways and terminal buildings typically have recognisable standardised attributes (e.g. to meet regulatory requirements) and well-documented coordinates/dimensions, but which can easily be confused with nearby, non-airport features such as roads and buildings.

Examples of the present disclosure may be used to identify many different types of airport features. Categories of airport feature that may be identified by examples of the present disclosure may include one or more of: runways, taxiways, aprons, runway markings (e.g. a category covering all runway markings and/or categories for specific runway markings such as edge markings, shoulder markings, threshold markings, designation markings, centreline markings, touchdown zone markings, or aiming point markings), taxiway markings (e.g. a category covering all taxiway markings and/or categories for specific taxiway markings such as edge markings, shoulder markings, direction sign markings, location sign markings, holding position markings), apron marking (e.g. a category covering all apron markings and/or categories for specific apron markings such as pedestrian pathway markings, vehicle roadway markings, parking area markings, gate markings), terminal buildings, hangar buildings, fences, sign boards, towers, grass/vegetation and standing water.

If the initial estimate passes the predetermined logical test(s), the reviewed estimate of the category of airport feature may be the same as the initial estimate. In such cases, the application of logical reasoning does not change the initial categorisation, but it may improve the confidence with which the categorisation is made.

Conversely, if the initial estimate does not pass the predetermined logical test(s), the reviewed estimate of the category of airport feature may be different to the initial estimate. The reviewed estimate may, for instance, comprise a revised or corrected category. For example, if the first machine learning algorithm initially estimates that a segment of the image contains a portion of runway but a predetermined logical test suggests that a runway cannot be located in the real-world position associated with that segment, the initial estimate may be revised to a category that satisfies with the predetermined logical test (e.g. a taxiway).

In a set of examples, the initial estimate is produced from only a single image of at least part of airport. The image may be, for instance, a visible light image, an infra-red image or a light detection and ranging (LIDAR) image.

However, in a set of examples, the method comprises receiving a plurality of images of at least part of the airport and processing said plurality of images to determine the initial estimate. At least some of the plurality of images may be captured at different times (e.g. a plurality of frames extracted from a video captured by a single camera). Additionally or alternatively, at least some of the plurality of images may be captured at the same time (e.g. by two cameras operating at the same time).

The plurality of images may have substantially, but not necessarily exactly, the same field of view (FOV) of the airport (i.e. they may be captured from substantially the same position and orientation and with the same magnification). For instance, the images may be captured at different times by the same static camera (e.g. frames of a video) or from an array of static cameras positioned in close proximity.

However, in some examples, the FOV of some or all of the plurality of images may be difference. There may, for instance, be differences in the position and/or orientation from which images are captured, and/or differences in magnification. This may be due to movement of a camera between capturing successive images (e.g. between frames of a video). For instance, some or all of the images may be captured by a camera mounted on an aircraft approaching or departing the airport. Using images with slightly different viewpoints may actually provide additional information to the first machine learning algorithm, potentially improving the accuracy of the categorisation.

In a set of examples, the plurality of images comprises at least two different types of image, i.e. images captured using different imaging modes. For instance, the plurality of images may comprise a combination of two or more of: a visible light image, an infra-red image and a LIDAR image. Combining different imaging modalities may provide additional information to the first machine learning algorithm.

In other words, examples of the present disclosure may comprise receiving a plurality of images of the at least part of an airport captured using different imaging modes; and processing said plurality of images using the first machine learning algorithm to determine the initial estimate. The first machine learning algorithm may simply receive the plurality of images as an input. However, in a set of examples some or all of the images are combined to produce hybrid image data, and providing the hybrid image data to the first machine learning algorithm as an input. The hybrid image data may comprise an enhanced image of at least part of the airport (e.g. with increased bit depth and/or additional information such as depth information).

Producing the hybrid image data may comprise processing the plurality of images with an image fusion machine learning algorithm, such as a graph convolutional neural network.

The capturing of the image(s) may be done separately to their processing (i.e. in a separate method and/or by a separate system). However, in a set of examples the method comprises capturing the image(s). Correspondingly, the system according to the second aspect may comprise an imaging subsystem arranged to capture the image of at least part of the airport and provide said image to the image data interface. The imaging subsystem may comprise multiple imaging devices (e.g. of the same or different type). For instance, the imaging subsystem may comprise one or more visible light cameras, infra-red cameras or LIDAR cameras. The imaging subsystem may be physically located with the processing apparatus (e.g. both may be carried by the same aircraft), although this is not essential as some or all of the processing may be done remotely from the device(s) used to capture the image(s).

As explained above, identifying one airport feature present in one segment of the image may aid scene perception by a human user and/or an automated system. However, images of airport scenes typically include multiple airport features in different segments. As such, in a set of examples, the first machine learning algorithm is used to identify a plurality of segments in the image and to determine initial estimates of a category of airport feature present in each of said segments. One or more real-world coordinates or dimensions associated with each segment may then be determined. One or more predetermined logical tests may then be applied to each initial estimate and the corresponding real-world coordinate(s) or dimension(s) to determine a reviewed estimate for each segment. In other words, the image(s) may be segmented into multiple regions corresponding to different airport features, and the category of each airport feature estimated. Providing reviewed estimates for airport features in multiple different segments of the image may further improve scene perception, e.g. by providing a human user or automated system with more information about what airport features are present in the airport scene.

In a set of examples, the image(s) of at least part of the airport are captured from an aircraft (e.g. using one or more on-board imaging devices). For instance, the image(s) may be captured by an aircraft approaching, at, or departing the airport. The method may be performed partially or entirely by an aircraft and may comprise capturing the image(s) from the aircraft. The system may be provided partially or entirely on-board an aircraft. For instance, the processing apparatus may be provided partially or entirely by an aircraft computer. Improving airport scene perception from an aircraft may aid with aircraft operations such as landing. take-off, taxiing or parking.

Additionally or alternatively, in a set of examples, the image(s) of at least part of the airport are captured from the ground (e.g. from a fixed ground position). For instance, image(s) may be captured by one or more imaging devices located at or near to the airport (e.g. a CCTV surveillance system). The system may comprise a partially or entirely ground-based system. Improving airport scene perception from the ground can assist with airport operations such as coordinating aircraft taxiing and parking or docking jet bridges.

In a set of examples, determining one or more real-world coordinates or dimensions of the segment involves using one or more parameters relating to the how the image(s) was captured (e.g. a focal length, position and/or orientation of a camera used to capture the image). These one or more parameters may be supplied with the image (e.g. as metadata), or determined separately (e.g. through known parameters of an accompanying imaging system or by separate measurement). Real-world coordinates or dimensions can then be determined by combining this information with data from the image itself (e.g. the apparent sizes of segments in visible light images and/or depth information from LIDAR images), using suitable techniques known in the art *per se.*

In a set of examples determining one or more real-world coordinates or dimensions associated with the segment (or segments) comprises obtaining information regarding a position from which the image was captured. In examples where the images are captured from an aircraft, this information may be obtained from an aircraft position or navigation apparatus (e.g. a GNSS receiver, an ILS, an altimeter).

Determining one or more real-world coordinates of the segment may comprise determining a real-world coordinate of one or more corners of the segment. Determining one or more real-world dimensions of the segment may comprise determining a dimension between two corners of the segment.

In a set of examples, additionally or alternatively, one or more real-world coordinates or dimensions associated with the segment may be determined by identifying one or more landmarks contained in the image (e.g. having known positions and/or dimensions). Known landmarks can act as references to inform the position and/or dimensions of other segments in the image.

In a set of examples, the method comprises determining an image horizon in the image(s) of at least part of the airport. This may be done using a forward projection operation.

The application of one or more predetermined logical tests involves checking whether the initial estimate meets one or more objective criteria that are decided in advance (e.g. before the image is captured). The test(s) may be authored by a human based on known realities and facts relating to airport features.

In some examples, applying the one or more predetermined logical tests comprises checking whether the initial estimate of category meets one or more general logical criteria (i.e. criteria that are not necessarily specific to the category estimated). For instance, it may be checked whether the real-world position of a segment in which an airport feature has been identified corresponds to an unfeasible real-world location for any airport feature (e.g. above a horizon line or outside an airport boundary).

In some examples, additionally or alternatively, applying the one or more predetermined logical tests comprises checking whether the initial estimate of category meets one or more category-specific criteria, such as feasible ranges of position, orientation or dimensions for that category of airport feature (e.g. ranges that are allowed by airport regulations). For instance, it may be checked whether the real-world dimension of a segment that has been identified as containing a runway meets minimum runway width requirements.

In some examples, additionally or alternatively, applying the one or more predetermined logical tests comprises checking whether the initial estimate of category meets one or more feature-specific criteria, such as known positions or dimensions of specific airport features (e.g. known orientations and sizes of runways, taxiways, airport buildings).

As explained above, in some examples, the first machine learning algorithm is used to identify a plurality of segments in the image and to determine initial estimates of a category of airport feature present in each of said segments. Some such examples may involve applying one or more predetermined logical tests that consider at least two segments. For instance, a predetermined logical test that may be applied comprises checking whether the presence of a first feature in a first segment (e.g. a runway) and a second feature (e.g. a taxiway) in a second segment are compatible (e.g. whether the taxiway is adjacent the runway). In other words, a predetermined logical test may comprise checking whether two or more initial estimates of a category of airport feature for two segments in the image are compatible.

In a set of examples, the method comprises detecting one or more movable objects in the image (or, in relevant examples, in one or more of the plurality of images). The image(s) may be processed using a second machine learning algorithm to detect one or more movable objects in said image. Moveable objects that may be detected include aircraft, ground vehicles, pedestrians and animals. In some examples, the object may additionally be identified. This may comprise identifying a type of the detected object (e.g. aircraft, vehicle, human) and/or a specific identity of the movable object (e.g. an aircraft identifier such as flight number).

In some examples, information relating to the detected object(s) is output (e.g. to a user or to another system). This may provide an additional aid for perceiving the airport scene. Additionally or alternatively, in some embodiments, the detection of the object may be used when applying one or more predetermined logical tests. For instance, a predetermined logical test may comprise checking whether any incompatible objects have been detected in the segment. For instance, an initial estimate that a given segment contains a runway may be incompatible with the detection of pedestrians in that segment.

In some examples, the method comprises tracking the moveable object, e.g. through a series of images of which none, some or all may be segmented and categorised. In some such examples, the method may comprise determining collision risk information relating to said object (e.g. a risk of the object colliding with another object such as an aircraft from which the image(s) are captured). The collision risk information may be output (e.g. to a user), e.g. if the collision risk information indicates that a collision is imminent and/or above an acceptable threshold risk level.

In some examples, the reviewed estimate of the category of airport feature is output to a user, e.g. a pilot of an aircraft approaching, at, or departing the airport. For instance, the system may comprise a display and be configured to output an indication of the reviewed estimate to the display. The indication may comprise highlighting and/or labelling that corresponds to the reviewed estimate. Outputting the indication to a display may comprise overlaying the indication (e.g. highlighting and/or labels) onto a digital image of the airport scene (e.g. the image that was processed to determine the estimate). Additionally or alternatively, the system may comprise a head-up display (HUD) and be configured to overlay the indication onto a user's actual view of the airport scene through the HUD.

In some examples, additionally or alternatively, the reviewed estimate of the category of airport feature is output to a control system. The estimate may aid the control system in making one or more control decisions.

In some examples, the control system comprises an aircraft computing system such as a flight management computer or a navigation system. In a set of examples, the aircraft computing system may be configured to control an aircraft to perform one or more automated operations using the reviewed estimate. For instance, the aircraft may perform an auto-land operation using the reviewed estimate, e.g. using the categorisation of a segment of the image as a runway centre line to assist with centring the aircraft on the runway. Additionally or alternatively the aircraft may perform a partially or fully automated taxiing operation using the reviewed estimate.

In some examples, additionally or alternatively, the control system comprises a ground-based airport control system. The control system may be configured to control one o more ground-based devices to perform one or more operations using the reviewed estimate. For instance, the ground-based airport control system may be configured to control aircraft parking and/or deployment of a jet bridge to a waiting aircraft using the reviewed estimate.

In a set of examples, the method comprises detecting text in the image(s). The image(s) may be processed using a third machine learning algorithm to detect text in the image. Airport scenes often feature many instances of text (e.g. on aircraft, signs, runway markings, and terminal buildings) and detecting this can aid with scene perception. For instance, one or more predetermined logical tests may relate to the presence or absence of text in a segment of the image (e.g. a predetermined logical test might be that some airport features such as vegetation adjacent the runway do not feature any text).

Simply detecting the presence of text regardless of its specific content can provide a useful input to for perceiving the airport scene. However, some examples of the present disclosure comprise identifying detected text (i.e. recognising characters and/or words in the text). Text recognition may be done by a separate process to text identification, but in some examples the third machine learning algorithm is arranged to both detect and identify text in the image.

In a set of examples, the method comprises detecting one or more signs in the image(s), such as signs painted on to the runway or taxiway or sign-boards. The method may involve associating detected text with said one or more signs.

The machine-learning algorithms utilised by examples of the present disclosure may be trained using any appropriate supervised or unsupervised learning technique.

In a set of examples, the first machine-learning algorithm is trained using training data comprising a set of training images of airport scenes and accompanying segmentation and categorisation data (e.g. a segmented and categorised version of each training mage). This training data may be produced manually, e.g. by humans manually segmenting images and categorising the segments. The method may comprise training the first machine learning algorithm by inputting the set of training images of airport scenes and iteratively optimising one or more parameters (e.g. neural network weightings) of the machine learning algorithm based on a comparison between segments and initial category estimates generated by the first machine-learning algorithm and the segmentation and categorisation data. The first machine learning algorithm may comprise a deep learning neural network (i.e. a neural network comprising more than three layers).

In a set of examples, the second machine-learning algorithm is trained using training data comprising a set of training images and accompanying object data (e.g. data identifying any movable objects present in each training image). This training data may be produced manually, e.g. by humans manually identifying objects in each image. The images may be airport images or other images. The method may comprise training the second machine learning algorithm by inputting the set of training images of airport scenes and iteratively optimising one or more parameters (e.g. neural network weightings) of the machine learning algorithm based on a comparison between objects identified by the second machine-learning algorithm and the object data. The second machine learning algorithm may comprise a deep learning neural network (i.e. a neural network comprising more than three layers).

In a set of examples, the third machine-learning algorithm is trained using training data comprising a set of training images and accompanying text data (e.g. data identifying any text present in each training image). This training data may be produced manually. The images may be airport images or other images. The method may comprise training the third machine learning algorithm by inputting the set of training images of airport scenes and iteratively optimising one or more parameters (e.g. neural network weightings) of the machine learning algorithm based on a comparison between text identified by the second machine-learning algorithm and the text data. The third machine learning algorithm may comprise a deep learning neural network (i.e. a neural network comprising more than three layers).

According to a further aspect of the present disclosure there is provided computer software that, when executed by suitable computing apparatus, causes said computing apparatus to execute a method disclosed herein. The computing apparatus may comprise a memory storing said software. The computing apparatus may comprise one or more processors arranged to execute said software.

Features of any aspect or example described herein may, wherever appropriate, be applied to any other aspect or example described herein. For instance, the processing apparatus of the system according to the second aspect may be arranged to perform steps disclosed herein as features of the method according to the first aspect. Where reference is made to different examples, it should be understood that these are not necessarily distinct but may overlap.

### Detailed Description

One or more non-limiting examples will now be described, by way of example only, and with reference to the accompanying figures in which:
Figure 1 is a schematic diagram of an aircraft for use with examples of the present disclosure;
Figure 2 is a schematic diagram of an airport scene perception system according to an example of the present disclosure;
Figure 3 is a flow diagram illustrating a method of perceiving an airport scene using the system of Figure 2; and
Figure 4 is an example output of the method.

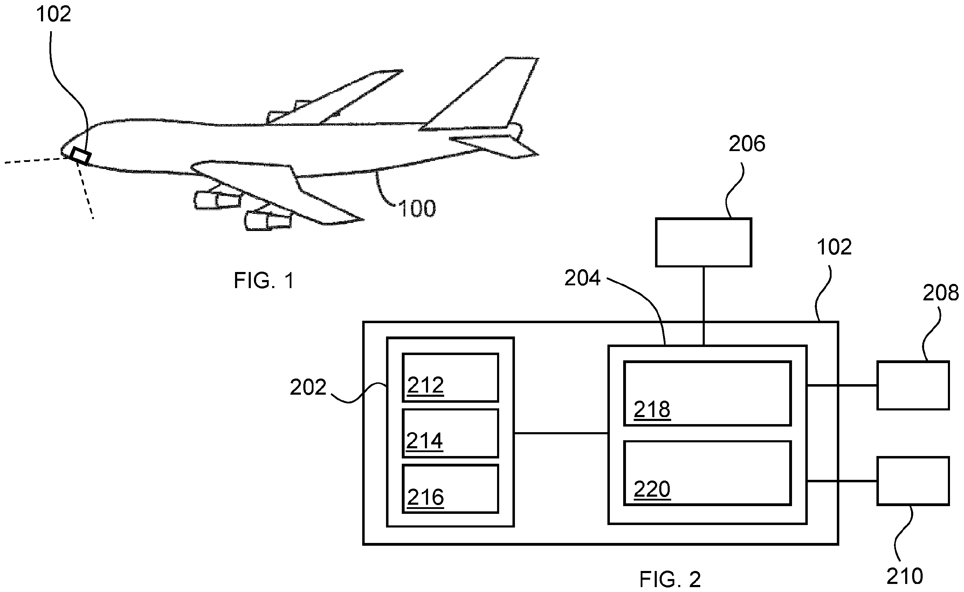

Figure 1 shows an aircraft 100 comprising an airport scene perception system 102. The airport scene perception system 102 is shown schematically in more detail in Figure 2.

The system 102 comprises an imaging subsystem 202 and a processing device 204. Also shown in Figure 2 is a ground-based imaging system 206 from which the system 102 can receive image data, and a user display 208 and a navigation system 210 to which the system 102 can output data.

The imaging subsystem 202 comprises a visible imaging camera 212 (e.g. an RGB colour camera), an infra-red camera 214 and a light detection and ranging (LIDAR) camera 216. Each of the cameras 212, 214, 216 is arranged to capture images having substantially the same field of view, although this is not essential.

The processing device 204 comprises a processor 218 and a memory 220.

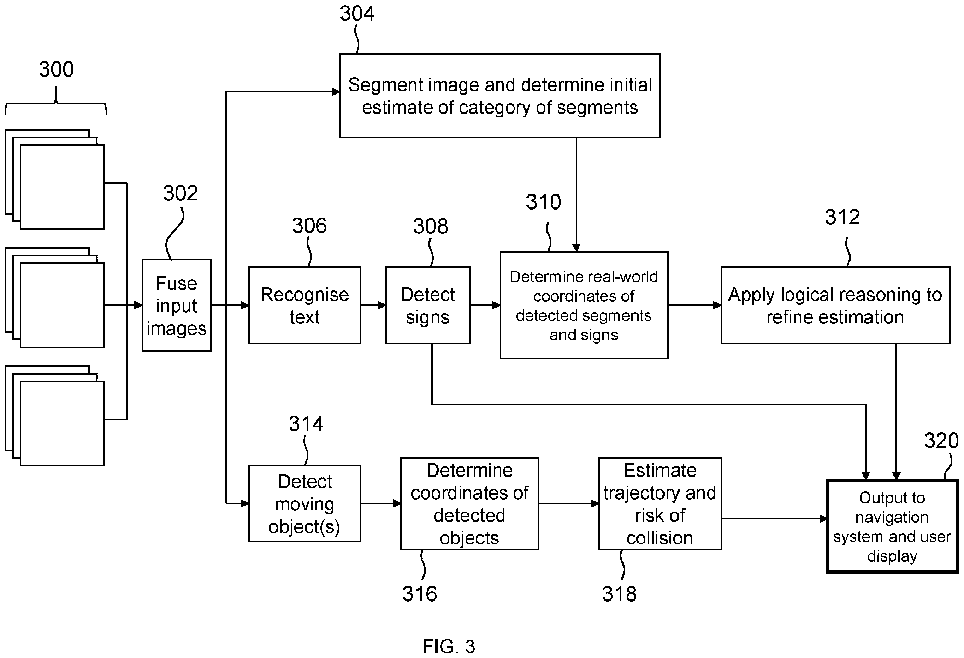

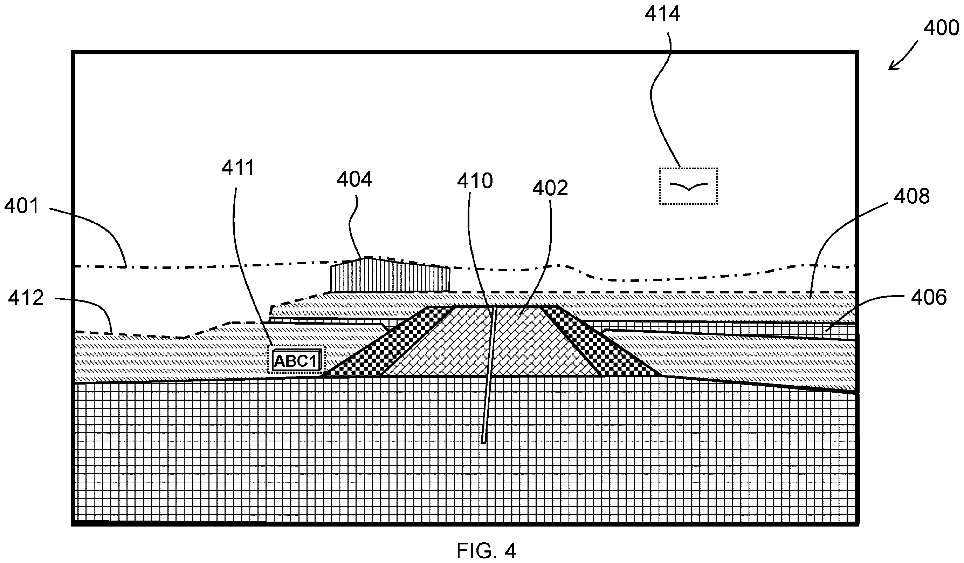

The system 102 is used to perceive an airport scene to assist a pilot of the aircraft 100 in navigating around the airport. This operation will now be described with additional reference to Figures 3 and 4.

In a first step 300, the cameras 212, 214, 216 of the imaging subsystem 202 each capture an image of an airport as the aircraft 100 approaches. These images are sent to the processing device 204. Each of the images covers substantially the same view of the airport.

In step 302, the processing device 204 combines the received images using a graph convolutional network (GCN) to produce hybrid image data. The hybrid image data captures information about the airport from three different imaging modalities.

The hybrid image data is then sent to three parallel branches. In the first branch, in step 304, the processing device 204 inputs the hybrid image data to a segmentation neural network. The segmentation neural network uses the hybrid image data to identify multiple different segments in the view of the airport in the captured images and to determine an initial estimate for airport features to which each segment corresponds. In other words, in step 304 the processing device 204 generates an initial estimate of what and where various airport features are present in the captured images.

Figure 4 shows an example segmentation map 400 generated by the segmentation neural network. The different segments identified by the segmentation neural network are shaded with different patterns. For instance, the segmentation map 400 comprises a first segment 402 that is initially estimated by the segmentation neural network to be a runway, and a second segment 404 that is initially estimated by the segmentation neural network to be an airport terminal building. The segmentation map 400 also comprises other segments 406, 408 and 410 that are initially estimated to be taxiways, grassy areas and a runway centreline marking respectively.

In parallel, in step 306, the processing device 204 inputs the output of the GCN to an optical character recognition (OCR) neural network. The OCR neural network identifies and recognises any text (e.g. letters, numbers, symbols) present in the captured images. In a further processing step 308, the recognised text is associated with physical signs in the images. For instance, the processing device 204 identifies a runway sign 411 associates recognised text with said the sign.

The first and second branches merge in step 310, in which the processing device 204 determines real-world coordinates and dimensions associated with the segments identified in step 304 and the signs identified in step 308. This step may involve computing a forward projection based on known parameters of the cameras 212, 214, 216 (e.g. focal length, position in the aircraft 100) and a known position of the aircraft 100 (e.g. from instruments such as an altimeter or a GNSS receiver). In step 310, the processing device 204 determines an image horizon 401 in the segmentation map 400.

In step 312, logical reasoning is used to review the initial estimates using the real-world coordinates and dimensions. This involves applying a series of predetermined logical tests to determine if the initial estimates are reasonable or should be changed. For instance, in step 312 the processing device 204 may check to see that the real-world coordinates of a segment identified as a runway or other airport infrastructure do not extend beyond known airport boundaries.

In this example, in step 312 the processing device 204 determines that the segment 404 that was categorised as an airport terminal building is located outside of an airport boundary 412. It therefore refines the categorisation by re-categorising the segment as being non-airport buildings.

Simultaneously, in the third branch, in step 314, the processing device 204 inputs the output of the GCN to an object detection neural network. The OCR neural network detects and identifies any objects (e.g. animals, people, vehicles, fences debris, buildings) present in the captured images. For instance, Figure 4 shows the detection of a bird 414 in flight near to the airport.

In a further processing step 316, the processing device 204 determines real-world coordinates of the detected object(s) (e.g. using similar techniques to that used in step 310).

Some of the detected objects may be moving (or movable). In step 318, the processing device 204 estimates a trajectory of one or more moving detected objects (e.g. based on previous detections of that object) and determines a risk of the aircraft 100 colliding with each of the detected objects (moving or not).

Finally, all three branches merge in step 320, in which the processing device 204 outputs the reviewed estimate of the airport feature present in said segment, the detected signs and the detected objects and their collision risk to the navigation system 210 and the user display 208.

The user display 210 outputs to the user (e.g. a pilot of the aircraft 102) an image of the approaching airport (e.g. one of the images captured by the imaging subsystem 202) overlaid with information on the estimated airport features corresponding to each segment and the detected signs and obstacles. For instance, the user display 208 may provide to the user the segmentation map 400 illustrated in Figure 4. This may, for instance, assist a user to land and/or taxi the aircraft 102 properly without knowing in advance the layout of the airport or when visibility is poor.

The navigation system 210 may also use the data from the processing device 204 to perform autonomous control over one or more movements of the aircraft 102, e.g. to avoid obstacles, or to automatically taxi to a desired stand.

While the disclosure has been described in detail in connection with only a limited number of examples, it should be readily understood that the disclosure is not limited to such disclosed examples. Rather, the disclosure can be modified to incorporate any number of variations, alterations, substitutions or equivalent arrangements not heretofore described, but which are commensurate with the scope of the disclosure. Additionally, while various examples of the disclosure have been described, it is to be understood that aspects of the disclosure may include only some of the described examples. Accordingly, the disclosure is not to be seen as limited by the foregoing description, but is only limited by the scope of the appended claims.

## Claims

**1.** A method of perceiving an airport scene, the method comprising:
receiving an image of at least part of an airport;
processing said image using a first machine learning algorithm to identify at least one segment in said image and determine an initial estimate of a category of airport feature present in said segment;
determining one or more real-world coordinates or dimensions associated with the segment;
applying one or more predetermined logical tests to the initial estimate of the category of airport feature present in the segment and the real-world coordinates or dimensions of the segment to determine a reviewed estimate of the category of airport feature present in the segment; and
outputting said reviewed estimate.

**2.** The method of claim 1, comprising receiving a plurality of images of the at least part of an airport captured using different imaging modes; and processing said plurality of images using the first machine learning algorithm to determine the initial estimate.

**3.** The method of claim 2, comprising combining the plurality of images to produce hybrid image data, and providing the hybrid image data to the first machine learning algorithm as an input. 3.

**3.** The method of any preceding claim, wherein applying the one or more predetermined logical tests comprises checking whether the real-world position of a segment in which an airport feature has been identified corresponds to an unfeasible real-world location for any airport feature.

**4.** The method of any preceding claim, comprising processing said image using a second machine learning algorithm to identify at least one movable object in said image and outputting information relating to said object.

**5.** The method of any preceding claim, comprising tracking the moveable object and determining and outputting collision risk information relating to said object.

**6.** The method of any preceding claim, comprising determining an image horizon in the image of at least part of the airport.

**7.** The method of any preceding claim, comprising outputting the reviewed estimate to a user by overlaying an indication of the reviewed estimate onto a digital image of the airport scene.

**8.** The method of any preceding claim, comprising outputting the reviewed estimate to an aircraft computing system.

**9.** The method of claim 8, comprising an aircraft performing one or more automated operations using receiving the reviewed estimate.

**10.** The method of any preceding claim, comprising capturing the image from an aircraft.

**11.** The method of any preceding claim, comprising capturing the image from a fixed ground position.

**12.** The method of any preceding claim, comprising processing said image using a third machine learning algorithm to detect and identify text in said image.

**13.** The method of claim 12, comprising detecting one or more signs in said image and associating said text with said one or more signs.

**14.** A system for perceiving an airport scene, the system comprising:
an image data interface for receiving an image of at least part of an airport; and
a processing apparatus arranged to;
process said image using a first machine learning algorithm to identify at least one segment in said image and determine an initial estimate of a category of airport feature present in said segment;
determine one or more real-world coordinates or dimensions associated with the segment;
apply one or more predetermined logical tests using the initial estimate of the category of airport feature present in the segment and the real-world coordinates or dimensions of the segment to determine a reviewed estimate of the category of airport feature present in the segment; and
output the reviewed estimate.

**15.** The system of claim 14, comprising:
an imaging subsystem arranged to capture the image of at least part of the airport and provide said image to the image data interface.
